# EUROPÄISCHE PATENTSCHRIFT

(11) **EP 2 377 782 B1**
(45) Veröffentlichungstag und Bekanntmachung des Hinweises auf die Patenterteilung: **15.05.2019**
(21) Anmeldenummer: 11162065.4
(22) Anmeldetag: 12.04.2011
(51) Int. Cl.: B65G 1/04, B65G 19/02, B65G 17/48

(54) **Warenlagersystem und darin verwendbarer Endlosförderer**
Goods storage system and endless conveyor used in same
Système de stockage de marchandises et convoyeur sans fin pouvant être utilisé à l'intérieur de celui-ci

(30) Priorität: 15.04.2010 DE 102010027804
(43) Veröffentlichungstag der Anmeldung: 19.10.2011
(73) Patentinhaber: RSL Logistik GmbH & Co. KG, 86899 Landsberg (DE)
(72) Erfinder:
(74) Vertreter: Weickmann & Weickmann PartmbB

(56) Entgegenhaltungen:
- EP-A1- 0 254 273
- WO-A1-2008/098596
- BE-A- 639 153
- DE-A1- 3 927 203
- DE-U1- 29 510 243
- DE-U1-202008 007 100
- FR-A1- 2 586 010
- US-A- 3 690 478
- US-A- 4 180 152
- US-A- 5 566 815

## Beschreibung

Die Erfindung betrifft ein Warenlagersystem mit einer Gruppe räumlich separierter Lagerbereiche, einer Förderanlage für den Warentransport zu und von einem jeweiligen Lagerbereich der Gruppe und Warentransferschnittstellen zwischen der Förderanlage und den Lagerbereichen.

Warenlagersysteme der vorstehend genannten Art finden z. B. im Bereich der Absatzlogistik von Waren Anwendung, um eine effiziente Bereitstellung von Waren für den Kunden unter Einhaltung vorgegebener Kriterien zu ermöglichen. Dabei wird die angelieferte Ware üblicherweise in einer Wareneingangsstelle des Warenlagersystems zunächst erfasst, gezählt, ggf. nach vorgegebenen Kriterien vorsortiert und dann den Lagerbereichen zugeführt. In den Lagerbereichen wird die Ware dann für die weitere Distribution und ggf. Kommissionierung bereitgehalten. Zum Zwecke der Kommissionierung und Distribution können z. B. automatische Sortieranlagen einer Warenausgangsstelle zugeordnet oder vorgeschaltet sein, so dass auftragsgemäße Warenzusammenstellungen für den Versand bereitgestellt werden können.

Als Lagerbereich wird im Rahmen der vorliegenden Anmeldung ein zusammenhängender, von anderen entsprechenden Bereichen räumlich abgegrenzter Bereich mit einer Vielzahl von Regalen und Lagerplätzen für Waren verstanden.

Ein EDV-gestütztes Lagerverwaltungssystem sorgt für die Steuerung der betrieblichen Abläufe im Warenlagersystem.

In der modernen Distributionslogistik sind höchst unterschiedliche Vertriebskonzepte zu berücksichtigen. Eine typische Aufgabe ist es, alle Geschäfte einer Ladenkette zu einem bestimmten Zeitpunkt mit einem bestimmten Produkt, etwa mit intensiv beworbener Aktionsware zu beliefern. Dabei sind oft sehr große Warenmengen in entsprechenden Losgrößen von einem betreffenden Warenlagersystem für den Versand vorzubereiten und schließlich auf die Verkaufsstellen zu verteilen. Eine andere typische Aufgabe der modernen Distributionslogistik besteht darin, Waren als Einzelartikel oder in sehr kleinen Mengen auf eine Vielzahl von Endkunden zu verteilen. Ein typisches Beispiel hierfür ist der Internethandel von Waren. Oft ist es auch noch gefordert, ein relativ großes Sortiment an Waren auf Abruf innerhalb eines eng begrenzten Zeitraums bereitzuhalten. Ein Endlosförderer entsprechend dem Oberbegriff des Anspruchs 1 ist aus der DE 20 2008 007100 U1 bekannt.

Gemäß der vorliegenden Erfindung soll ein flexibles Warenlagersystem bereitgestellt werden, welches zur Bewältigung der unterschiedlichen Distributionsaufgaben in einer optimierten Weise nutzbar ist. Hierfür ist ein geeigneter Endlosförderer erforderlich.

Zur Lösung dieser Aufgabe wird erfindungsgemäß ein in einem Warenlagersystem verwendbarer Endlosförderer vorgeschlagen, der als raumgängiger Kettenförderer mit einem Kettenantriebsmittel,
einer von dem Kettenantriebsmittel zum kontinuierlichen Umlauf längs einer geschlossenen Förderstrecke angetriebenen Endlosförderkette,
einer die Endlosförderkette längs der Förderstrecke zumindest abschnittsweise führenden Kettenführungsanordnung und von der Endlosförderkette mitgeführten Warenhalterungsmitteln zur Aufnahme von zu fördernden Waren ausgebildet ist,
wobei die Endlosförderkette stangenartige Kettenglieder und Kreuzgelenkelemente, die aufeinanderfolgende Gliederstangen gelenkig miteinander verbinden, aufweist, wobei die Warenhalterungsmittel Gestängeelemente und Brückenglieder, die die Gestängeelemente zu einem zusammenhängenden und entlang der Endlosförderkette verlaufenden Halterungsgestänge für daran anzuhängende Warenträgerhaken gelenkig miteinander verbinden, umfasst, wobei die Gestängeelemente an den Kettengliedern der Endlosförderkette angehängt sind, wobei die Brückenglieder zumindest einseitig mit dazu benachbarten Gestängeelementen mittels einer jeweiligen Langloch-Gelenkverbindung, bei der ein Gelenkstift in einem Langloch verschiebbar geführt ist, verbunden sind.

Der erfindungsgemäße Endlosförderer ist raumgängig, so dass er Steigungsstrecken, Neigungsstrecken, Geradeausstrecken und Kurvenstrecken in seinem Förderstreckenverlauf aufweisen kann. Die Kreuzgelenkelemente und die Brückenglieder sind so gestaltet und mit den stangenartigen Kettengliedern bzw. Gestängeelementen verbunden, dass sich die vorstehend genannten flexiblen Möglichkeiten im Förderstreckenverlauf des Endlosförderers ergeben. Die stangenartigen Kettenglieder erlauben eine robuste Ausgestaltung der Endlosförderkette und dienen als Befestigungsstellen für die Befestigung der Gestängeelemente, so dass die Endlosförderkette ein belastungsfähiges Halterungsgestänge tragen kann. Der so gestaltete Endlosförderer ist mit relativ geringen Kosten realisierbar und erlaubt einen zuverlässigen kontinuierlichen Dauerbetrieb. Die vorzugsweise als drehbare Stützrollen ausgebildeten Abstützelemente der Kreuzgelenkelemente gewährleisten eine laufruhige Führung der Endloskette an der Kettenführungsanordnung.

Gemäß einer Weiterbildung des erfindungsgemäßen Endlosförderers weist jedes Gestängeelement des Halterungsgestänges einen im Wesentlichen parallel zu dem es tragenden Kettenglied ausgerichteten unteren Stangenabschnitt und wenigstens einen davon quer zum betreffenden Kettenglied abstehenden Verbindungssteg auf, der durch Befestigungsmittel mit dem Kettenglied verbunden ist, wobei in dem Stangenabschnitt ein Langloch vorgesehen ist, welches von einem Gelenkstift eines benachbarten Brückengliedes durchsetzt ist, so dass bei einer Änderung der Steigung der Förderrichtung ausgleichsweise eine relative Verschiebung und Drehbewegung zwischen dem Brückenglied und dem Stangenabschnitt stattfinden kann. Dabei kann es vorgesehen sein, dass jedes Brückenelement nur an einem seiner entgegengesetzten Enden vermittels einer Langloch-Gelenkverbindung mit dem an diesem Ende benachbarten Gestängeelement verbunden ist, während es an dem anderen Ende durch ein einfaches Achsdrehgelenk mit dem an diesem anderen Ende benachbarten Gestängeelement verbunden ist.

Die Gestängeelemente und die Brückenelemente sind einander abwechselnd so relativ zu der Endloskette angeordnet, dass die Verbindungsstege der Gestängeabschnitte bei Projektion auf die Endloskette symmetrisch zwischen zwei aufeinanderfolgenden Kreuzgelenkelementen liegen und die Brückenglieder bei Projektion auf die Endloskette in Flucht mit den Kreuzgelenken liegen. Diese Anordnung dient dazu, eine flexible Raumgängigkeit des Endlosförderers zu gewährleisten.

Besonders bevorzugt ist der erfindungsgemäße Endlosförderer als Endlos-Stetigförderer in einem Warenlagersystem, welches z. B. bevorzugt für die Einlagerung und Distributionsvorbereitung von an Kleiderbügeln hängenden Bekleidungswaren eingerichtet ist, wobei die Kleiderbügel unmittelbar an dem Halterungsgestänge des Endlosförderers angehängt werden können. Selbstverständlich können auch andere Waren mit dem Endlos-Stetigförderer transportiert werden, sofern sie Abschnitte, Halterungen oder Verpackungen haben, die an den Förderer angehängt werden können.

Bevorzugt wird ein solches den erfindungsgemäßen Endlosförderer umfassendes Warenlagersystem mit dem Merkmal vorgeschlagen, dass die Förderanlage einen im Normalbetrieb kontinuierlich durchlaufenden ersten Endlos-Stetigförderer umfasst bzw. der erfindungsgemäße Endlosförderer als solcher genutzt wird, der Warentransferschnittstellen aller Lagerbereiche miteinander verbindet.

Der kontinuierlich durchlaufende Endlos-Stetigförderer erlaubt über die betreffenden Warentransferschnittstellen Zugriff auf jeden Lagerbereich, etwa um Waren in betreffenden Lagerbereichen zu stauen und/oder um Waren aus betreffenden Lagerbereichen abzuziehen und fortzutransportieren. Die Möglichkeit des im Wesentlichen jederzeit möglichen wahlweisen Zugriffs auf den Endlos-Stetigförderer erlaubt ein sehr flexibles Lager- und Distributionsmanagement, um höchst unterschiedliche Kommissions- und Distributionsaufgaben zu lösen. Warentransferschnittstellen sind Stellen, an denen Waren vom Endlos-Stetigförderer in den betreffenden Lagerbereich übernommen oder vom Lagerbereich an den Endlos-Steigförderer übergeben werden können, sei dies manuell oder automatisiert.

Insbesondere bei sehr großen Warenlagersystemen mit einer Vielzahl von Lagerbereichen stellt der Endlos-Stetigförderer eine durchaus nennenswerte eigene Lagerkapazität für die jeweils von ihm transportierten Waren dar, und so kann es je nach geforderter Warenzusammenstellung durchaus vorkommen, dass ein Warenartikel ohne Zwischenspeicherung in einem Lagerbereich an dem Endlos-Stetigförderer verbleibt, bis dieser Warenartikel zur Kommissionierung und Distribution weitergegeben wird.

Der erste Endlos-Stetigförderer ist vorzugsweise mit allen Warentransferschnittstellen der Lagerbereiche und mit wenigstens einer der Gruppe zugeordneten Warenzufuhrschnittstelle für die Wareneinschleusung von außen und wenigstens einer Warenableitungsschnittstelle für die Warenableitung aus der Gruppe funktional verbunden, um einen Austausch von Warenartikeln jeweils zu ermöglichen. Dabei können die Warentransferschnittstellen so ausgestaltet sein, dass sie einen bidirektionalen Transfer von Waren zwischen dem betreffenden Lagerbereich und dem ersten Endlos-Stetigförderer ermöglichen. Alternativ ist jedoch auch eine unidirektionale Variante möglich, bei der zumindest einige Warentransferschnittstellen den Warentransfer nur in einer Richtung z. B. von einem betreffenden Lagerbereich zu dem ersten Endlos-Stetigförderer ermöglichen.

Eine weitere Ausführungsform der Erfindung sieht vor, dass die Förderanlage einen alle Lagerbereiche an Warentransferschnittstellen miteinander verbindenden, im Normalbetrieb kontinuierlich durchlaufenden zweiten Endlos-Stetigförderer umfasst. In diesem Fall sind somit zwei derartige Endlos-Stetigförderer vorgesehen, von denen z. B. der erste ausschließlich für die Warenzufuhr zu den Lagerbereichen dient, wohingegen der zweite ausschließlich für den Warenabtransport von den Lagerbereichen dient. Die beiden Endlos-Stetigförderer können jedoch gemäß einer Ausführungsform der Erfindung auch so organisiert sein, dass sie für den bidirektionalen Austausch mit Lagerbereichen eingerichtet sind.

Gemäß einer bevorzugten Ausführungsform der Erfindung ist es vorgesehen, dass der jeweilige Endlos-Stetigförderer raumgängig ist und die Lagerbereiche mit ihren Warentransferschnittstellen über unterschiedliche Höhenebenen, insbesondere über unterschiedliche Lagergebäudestockwerke verteilt angeordnet sind. "Raumgäng" bedeutet, dass der Endlos-Stetigförderer Steigungsstrecken und Neigungsstrecken zwischen den Höhenebenen überwinden sowie Kurvenstrecken durchfahren kann. Auf diese Weise lassen sich nach dem erfindungsgemäßen Konzept sehr große Warenlagersysteme realisieren, bei denen der bzw. die betreffenden Endlos-Stetigförderer eine Länge von mehreren Kilometern und somit eine große eigene Lagerkapazität aufweisen können.

Der Austausch von Waren an den Warentransferschnittstellen bzw. an der Warenzufuhrschnittstelle und der Warenableitungsschnittstelle kann ggf. manuell durch Bedienungspersonen erfolgen. Vorzugsweise umfassen die Warentransferschnittstellen jedoch Einrichtungen für die automatisierte Übergabe von Warenartikeln. So ist es bevorzugt, dass in wenigstens einem Lagerbereich wenigstens eine mittels einer Steuereinrichtung steuerbare Warentransfereinrichtung vorgesehen ist, die zum gesteuerten automatischen Transferieren von Waren zwischen dem ersten Endlos-Stetigförderer und dem betreffenden Lagerbereich an einer Warentransferschnittstelle eingerichtet ist. Hierbei handelt es sich vorzugsweise um eine Weichenanordnung. In gleicher Weise wird es vorgeschlagen, dass in wenigstens einem Lagerbereich wenigstens eine mittels der Steuereinrichtung steuerbare Warentransfereinrichtung vorgesehen ist, die zum gesteuerten automatischen Transferieren von Waren zwischen dem zweiten Endlos-Stetigförderer und dem betreffenden Lagerbereich an einer Warentransferschnittstelle eingerichtet ist, sofern ein solcher zweiter Endlos-Stetigförderer installiert ist. Die Steuereinrichtung ist vorzugsweise Bestandteil eines EDV-gestützten Lagermanagementsystems.

Der Automatisierungsgrad des Warenlagersystems nach der Erfindung kann den jeweiligen Anforderungen entsprechend kostenoptimiert gewählt sein.

Was die Lagerbereiche anbelangt, so hat es sich als vorteilhaft erwiesen, diese so zu organisieren, dass sie eine Vielzahl nebeneinander liegender Reihen von Lagerplätzen umfassen, wobei die Warentransferschnittstellen nahe den Reihenenden der Lagerplatzreihen vorgesehen sind. Der bzw. die Endlos-Stetigförderer können dann so verlaufen, dass sie die Lagerbereiche an den Warentransferschnittstellen lediglich tangieren, wobei enge Kurven im Förderstreckenverlauf des bzw. der Endlos-Stetigförderer auf diese Weise leicht vermieden werden können. Bei den Endlos-Stetigförderern kann es sich z. B. um Kettenförderer, Schneckenförderer, Bandförderer und dgl. handeln, die kontinuierlich angetrieben werden.

Die Lagerbereiche eines Warenlagersystems nach der Erfindung sind räumlich separierte Bereiche mit einer Vielzahl von Lagerplätzen, z. B. mehrere Hundert oder gar mehrere Tausend Lagerplätze. So kann ein Lagerbereich eines Warenlagersystems nach der Erfindung z. B. eine Vielzahl von Regalen in einer speziellen Regalanordnung umfassen. Dies können je nach Ausgestaltung des Warenlagersystems z. B. Hängeregalsysteme oder Fachbödenregalsysteme sein. Hängeregalsysteme eignen sich zur Einlagerung von an Warenträgern mit Haken, wie z. B. Kleiderbügeln, befindlichen Waren.

Gemäß einer Variante der Erfindung kann der Endlos-Stetigförderer in seiner Förderrichtung umschaltbar sein.

Die Erfindung wird im Folgenden unter Bezugnahme auf die Figuren näher erläutert.
- Fig. 1: zeigt eine schematische Darstellung eines Lagerbereichs eines Warenlagersystems nach der Erfindung mit Anschluss an zwei Endlos-Stetigförderern.
- Fig. 2: zeigt in ebenfalls schematischer Darstellung zwei in übereinander liegenden Ebenen vorgesehene Lagerbereiche eines Warenlagersystems nach der Erfindung.
- Fig. 3a u. Fig. 3b: zeigen in einer schematischen Teildarstellung eine Draufsicht auf den Eingangsbereich bzw. den Ausgangsbereich einer Hängeregalebene aus Fig. 2.
- Fig. 4: zeigt in einer der Fig. 2 ähnlichen Perspektive zwei auf verschiedenen Höhenebenen liegende Lagerbereiche mit einer alternativen Ausgestaltung der Hängeregale.
- Fig. 5a u. Fig. 5b: zeigen in einer schematischen Teildarstellung eine Draufsicht auf den Eingangsbereich bzw. den Ausgangsbereich eines Lagerbereichs aus Fig. 4.
- Fig. 6 - Fig. 9: zeigen schematische Darstellungen von weiteren alternativen Ausgestaltungen von Lagerbereichen eines Warenlagersystems nach der Erfindung in Draufsicht.
- Fig. 10: zeigt in einer perspektivischen Teildarstellung einen Abschnitt eines Endlosförderers nach der Erfindung mit damit transportierten Kleidungsstücken.
- Fig. 11 u. Fig. 12: zeigen in einer der Fig. 10 ähnlichen Perspektive einen Teil des Endlosförderers mit einer warenzuführenden Warentransfereinrichtung bzw. einer warenableitenden Warentransfereinrichtung.
- Fig. 13: zeigt in einer perspektivischen Darstellung die Endlosförderkette mit daran angeordnetem Haltegestänge in einem geradlinigen Streckenabschnitt.
- Fig. 14: zeigt den Endlosfördererabschnitt aus Fig. 13 mit einer Kettenführungsanordnung.
- Fig. 15: zeigt zwei Glieder des Endlosfördererabschnitts aus Fig. 13 in ihrer Ausrichtung beim Übergang von einer Steigungsstrecke auf eine Horizontalstrecke.
- Fig. 16: zeigt in Draufsicht ein Brückenglied des Endlosförderers mit daran angelenkten Gestängeelementen in der Ausrichtung bei Kurvenfahrt.
- Fig. 17: zeigt im Querschnitt ein Beispiel eines Kettenführungsschienenprofils einer Kettenführungsschiene des Endlos-Stetigförderers.
- Fig. 18 u. Fig. 19: zeigen in einer perspektivischen Teildarstellung zwei weitere Ausführungsbeispiele eines Endlos-Stetigförderers nach der Erfindung.

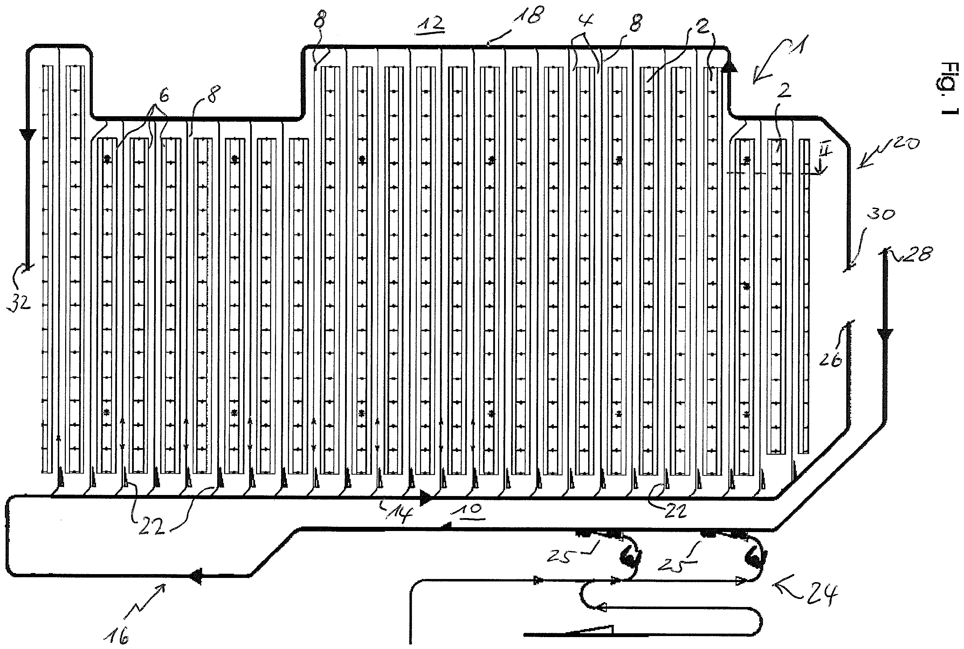

Das in Fig. 1 gezeigte Ausführungsbeispiel eines Lagerbereichs eines Warenlagersystems nach der Erfindung weist eine Vielzahl von Hängeregalen 2 zur Einlagerung von an Kleiderbügeln hängenden Kleidungsstücken auf. Die in einer schematischen Draufsicht gezeichneten Hängeregale 2 sind in dem Lagerbereich 1 parallel zueinander und nebeneinander mit dazwischen verlaufenden Regalgängen 4 angeordnet. Von jedem Regalgang 4 aus kann auf zwei einander gegenüberliegende Regale 2 zugegriffen werden, und zwar auf Anhängstangen 6 dieser Regale 2, um daran Kleiderbügel mit ihren Haken anzuhängen oder davon abzunehmen. In jedem Regalgang 4 ist im Wesentlichen parallel zu und mittig zwischen den einander gegenüberliegenden Regalen 2 eine Gleitstange 8 zur Aufnahme von Kleiderbügeln mit daran hängender Ware vorgesehen. Die mit ihren Haken an den Gleitstangen 8 hängenden Kleiderbügel (in Fig. 1 nicht gezeigt) können längs der Gleitstangen 8 daran gleitend verschoben werden.

Die Regale 2 sind mit ihren Längsenden zu einander entgegengesetzten Seiten 10 bzw. 12 ausgerichtet, wobei es sich bei der Seite 10 um die Wareneingangsseite des Lagerbereichs 1 handelt, und die Seite 12 die Ausgangsseite des Lagerbereichs 1 bildet. Längs der Regalenden auf der Wareneingangsseite 10 erstreckt sich ein Förderstreckenabschnitt 14 eines Endlos-Stetigförderers 16, der den gezeigten Lagerbereich 1 mit weiteren (nicht gezeigten) Lagerbereichen in anderen Stockwerken des auch den Lagerbereich 1 beherbergenden Lagergebäudes verbindet. Längs der Regalenden an der Warenausgangsseite des Lagerbereichs 1 erstreckt sich ein Förderstreckenabschnitt 18 eines zweiten Endlos-Stetigförderers 20, der den Lagerbereich 1 mit den genannten weiteren Lagerbereichen verbindet.

In Fig. 1 ist jede der Gleitstangen 8 durch eine jeweilige Warenzuführungsschnittstelle 22 mit dem ersten Endlos-Stetigförderer 16 in der Weise funktional gekoppelt, dass Waren vom ersten Endlos-Stetigförderer 16 über die Schnittstellen 22 auf die betreffenden Gleitstangen 8 des Lagerbereichs 1 aufgenommen werden können. Dies kann im einfachsten Fall in der Weise geschehen, dass eine Bedienungsperson zur Einlagerung bestimmte Waren mit deren Kleiderbügeln vom Förderer 16 abnimmt und auf eine betreffende Gleitstange 8 hängt. In einem solchen Falle wäre die Schnittstelle 22 lediglich ein freier Platz, der es der Bedienungsperson erlauben würde, den vorstehend genannten Vorgang des Umhängens der Ware vom Förderer 16 auf eine Gleitstange 8 erlauben würde. Vorzugsweise weisen die Warenzuführungsschnittstellen 22 jedoch automatische Warentransfereinrichtungen auf, welche ein automatisches Ausschleusen von an Kleiderbügeln hängenden Waren aus dem Förderer 16 nach vorbestimmten Auswahlkriterien ermöglichen. Der erste Endlos-Stetigförderer 16 ist in der den Lagerbereich 1 in Fig. 1 beherbergenden Stockwerksebene an einer Wareneingangsstelle 24 mit Warenzufuhrschnittstellen 25 angeschlossen, an der dem Endlos-Stetigförderer 16 von außen Ware zugeführt wird, die in dem Warenlagersystem in einem oder mehreren Lagerbereichen 1 eingelagert werden soll.

Mit 26 ist in Fig. 1 die Stelle bezeichnet, an der die Förderstrecke des ersten Endlos-Stetigförderers 16 aus dem Stockwerk, in dem der Lagerbereich 1 untergebracht ist, hinausführt zu einem anderen Stockwerk mit einem weiteren Lagerbereich. Mit 28 ist in Fig. 1 die Stelle bezeichnet, an welcher die Förderstrecke des ersten Endlos-Stetigförderers 16 das Stockwerk, in dem der Lagerbereich 1 untergebracht ist, wieder erreicht, nachdem sie in der in Fig. 1 gezeigten Weise in mehreren Stockwerken längs der Eingangsseiten 10 betreffender Lagerbereiche entlanggeführt hat, um Waren zur Einlagerung in diesen Lagerbereichen anzuliefern.

Die Förderstrecke des zweiten Endlos-Stetigförderers 20 tritt an der Stelle 30 in das Stockwerk gemäß Fig. 1 ein und an der Stelle 32 wieder zu einem anderen Stockwerk hin aus. Sämtliche Lagerbereiche des Warenlagersystems sind auch an den zweiten Endlos-Stetigförderer 20 angeschlossen, und zwar in der Weise, wie dies in Fig. 1 dargestellt ist. Die Gleitstangen 8 verlaufen an der Ausgangsseite 12 zu dem Förderer 20, so dass an betreffenden Warenausgangsschnittstellen 34 Waren von betreffenden Gleitstangen 8 auf den Förderer 20 überführt werden können. Je nach Ausgestaltung können die Warenausgangsschnittstellen 34 für die manuelle Übergabe der Waren von den Gleitstangen 8 auf den Förderer 20 ausgebildet sein. Vorzugsweise sind jedoch auch dort betreffende Warentransfereinrichtungen zum gesteuerten automatischen Transferieren von Waren vom Lagerbereich 1 auf den Förderer 20 vorgesehen.

Der zweite Endlos-Stetigförderer 20 ist (in nicht gezeigter Weise) an eine Distributionsstelle in einem anderen Stockwerk angeschlossen, an welcher Waren vom Förderer 20 entnommen und für die Warendistribution einer Sortier- und/oder Ausgangspufferanlage zugeführt werden.

Die beiden Endlos-Stetigförderer 16, 20 sind raumgängige Förderer, die stetig umlaufen und einen im Wesentlichen jederseitigen Zugriff von jedem der Warenlagerbereiche aus und ggf. von außerhalb der Lagerbereiche erlauben, um Waren einzulagern oder auszulagern. Dies erfolgt unter Kontrolle einer Steuereinrichtung eines EDV-gestützten Lagermanagementsystems.

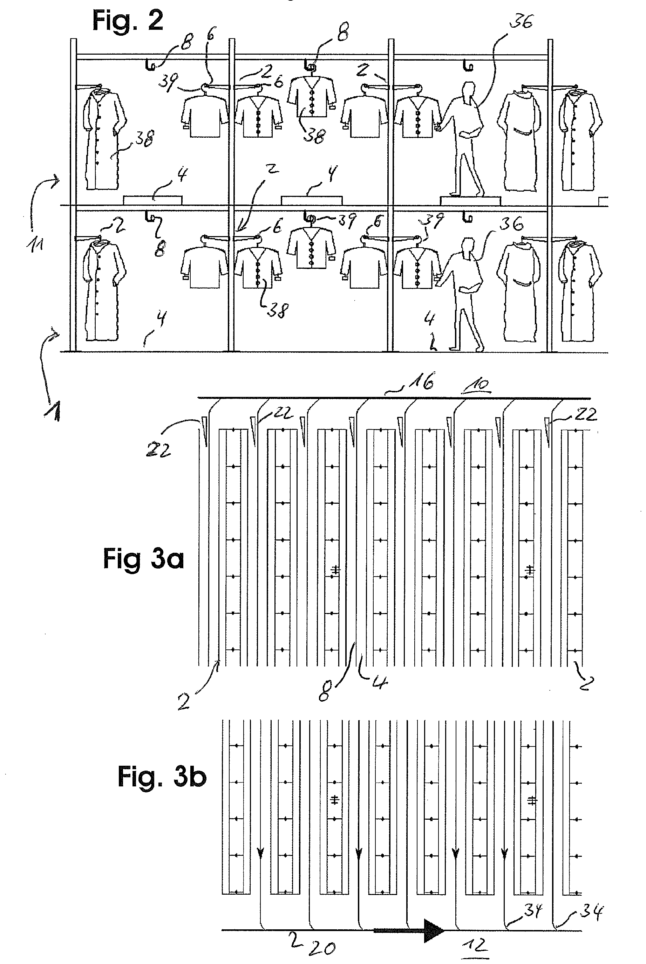

In Fig. 2 sind in einer schematischen Schnittseitenansicht und in Teildarstellung der Lagerbereich 1 und ein in einem darüberliegenden Stockwerk vorgesehener Lagerbereich 11 gezeigt, welcher von seinem Aufbau und seiner Organisation her dem Lagerbereich 1 im Wesentlichen entspricht. Die Schnittebene der Fig. 2 ist in Fig. 1 bei II. angedeutet. Zu erkennen sind die Hängeregale 2 mit ihren Anhängstangen 6, die Regalgänge 4 und die Gleitstangen 8, welche im Beispielsfall hängend an den Decken der Stockwerksebenen angeordnet sind. Eine jeweilige Bedienungsperson 36 kann nach einem bestimmten Einlagerungs- bzw. Auslagerungsprogramm Waren 38 von Anhängstangen 6 abheben und an eine betreffende Gleitstange 8 anhängen bzw. andere Waren von einer Gleitstange 8 abheben und an eine Anhängstange 6 anhängen. Bei den Waren 38 handelt es sich um Kleidungsstücke, die an Kleiderbügeln vorgesehen sind. Letztere hängen mit ihren Haken 39 an einer Stange 6 bzw. 8. Da die Gleitstangen 8 sowohl an den Förderer 16 (Fig. 1) als auch an den Förderer 20 (Fig. 1) "anschließbar" sind, ist eine stetige Bestückung der Lagerbereiche 1, 11 mit einzulagernden Waren 38 und ein stetiges Auslagern der Waren 38 nach Bedarf möglich. Es ist noch darauf hinzuweisen, dass jeder einzelne Artikel 38 eine individuelle maschinenlesbare Markierung, sei es ein Barcode-Label oder ein RFID-Label oder dgl., aufweist und dass an Abzweigungspunkten bzw. Einschleusungspunkten der Förderer 16, 20 Sensoren vorgesehen sind, welche die maschinenlesbaren Markierungen erfassen und ihre Daten an die Steuereinrichtung weitergeben. Die Steuereinrichtung kann automatische Warentransfereinrichtungen an den Warentransferschnittstellen 22, 34 entsprechend steuern, um betreffende Warenartikel 38 gezielt in einen Lagerbereich einzuschleusen bzw. aus diesem aufzunehmen.

Die Fig. 3a und 3b zeigen in einer schematischen Teildarstellung eine Draufsicht auf den Eingangsbereich bzw. den Ausgangsbereich einer Hängeregalebene aus Fig. 2 mit Eingangs-Transferschnittstellen 22, welche an der Eingangsseite 10 des Lagerbereichs 1 diesen mit dem Förderer 16 verbinden, und mit Ausgangs-Transferschnittstellen 34, welche an der Ausgangsseite 12 des Lagerbereichs 1 diesen mit dem Förderer 20 verbinden.

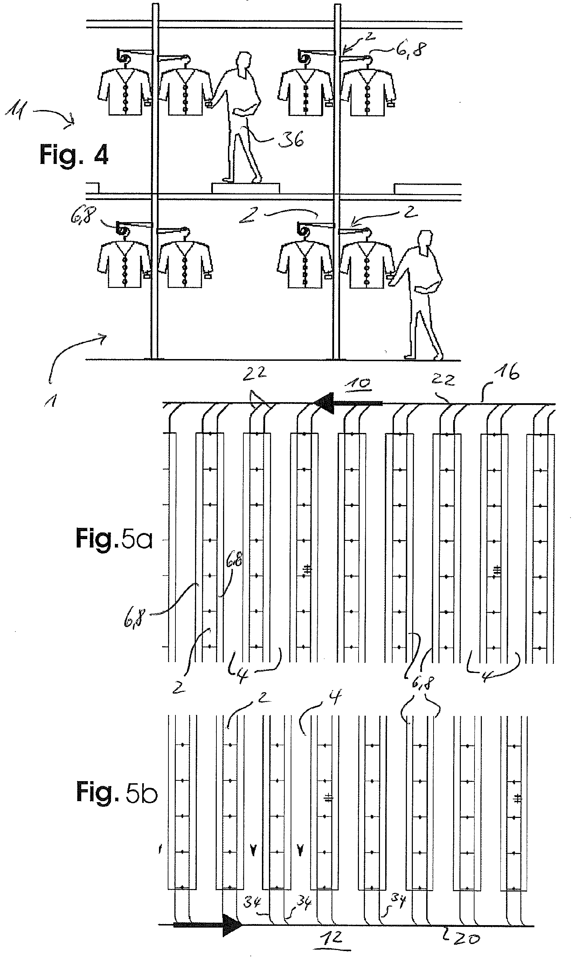

Fig. 4 zeigt in einer der Fig. 2 ähnlichen Perspektive zwei auf verschiedenen Höhenebenen liegende Lagerbereiche 1, 11 mit einer alternativen Ausgestaltung der Hängeregale 2. Bei der Ausgestaltung nach Fig. 4 sind die Anhängstangen 6 jeweils Gleitstangen 8, welche über Warentransferschnittstellen 22 an der Eingangsseite 10 des Lagerbereichs mit dem Förderer 16 gemäß Fig. 5a in Verbindung stehen, und welche an der Ausgangsseite 12 des Lagerbereiches über Warentransferschnittstellen 34 mit dem Förderer 20 gemäß Fig. 5b in Verbindung stehen. Die Pfeile in den Figuren markieren die Bewegungsrichtung der betreffenden Endlos-Stetigförderer 16 bzw. 20. Das Warenlagersystem nach Fig. 4 hat den Vorteil, dass die Anhängstangen 6 unmittelbar und ohne den Umweg über eine gesonderte Gleitstange 8 an die Förderer 16 bzw. 20 "anschließbar" sind.

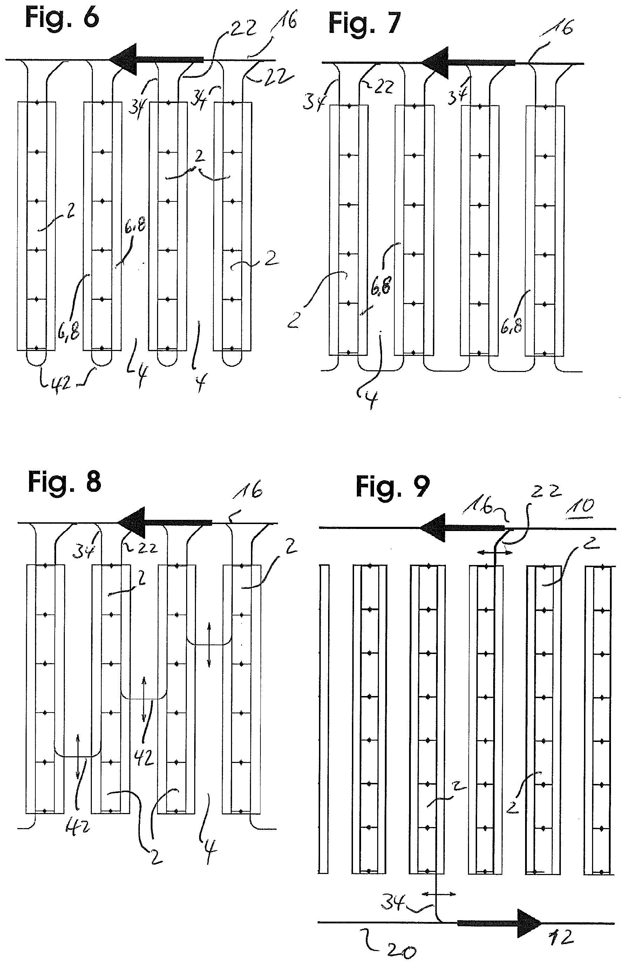

Die Fig. 6 - 9 zeigen in einer den Fig. 5a und 5b ähnlichen Perspektive schematische Darstellungen weiterer Ausführungsformen von Lagerbereichen von Lagersystemen nach der Erfindung. Gemäß den Fig. 6 - 8 sind die Regale 2 nur an einer Seite des Lagerbereichs an einem Endlos-Stetigförderer16 über betreffende Einlassschnittstellen 22 und Auslassschnittstellen 34 angeschlossen. Die als Gleitstangen 8 ausgebildeten Anhängstangen 6 eines jeweiligen Regals 2 sind an der vom Förderer 16 entfernten Seite des Lagerbereichs durch Gleitstangenbrückenbögen 42 verbunden, so dass über eine Eingangs-Schnittstelle 22 zugeführte Ware entlang einer Anhängstange 6 des betreffenden Regals und über das Brückenelement 42 hinweg auf die andere Anhängstange 6 verschoben werden kann, wonach sie schließlich über die Ausgangs-Schnittstelle 34 des betreffenden Regals wieder an den Förderer 16 bei Bedarf übergeben werden kann. In Fig. 6 verbinden die Brückenelemente 42 die Anhängstangen 6 eines Regals. In Fig. 7 überbrücken die Brückenelemente 42 einander benachbarte Anhängstangen 6 verschiedener Regale 2.

Fig. 8 zeigt eine Variante der Ausgestaltung der Fig. 7, wobei die in Fig. 7 an den vom Förderer 16 entfernten Enden des Lagerbereichs vorgesehenen Brückenelemente 42 bei der Variante in Fig. 8 längs der Regale 2 verschiebbar sind.

Bei dem Ausführungsbeispiel gemäß Fig. 9 ist eine Eingangs-Schnittstelle 22 von Regal zu Regal verschiebbar, um an der Eingangsseite 10 des Lagerbereichs den Förderer 16 mit einem betreffenden Regal 2 zu verbinden. In entsprechender Weise ist auch eine Warenausgangs-Transferschnittstelle 34 von Regal zu Regal an der Ausgangsseite 12 des Lagerbereichs von Regal zu Regal verschiebbar, um ein betreffendes Regal mit dem Förderer 20 zu verbinden.

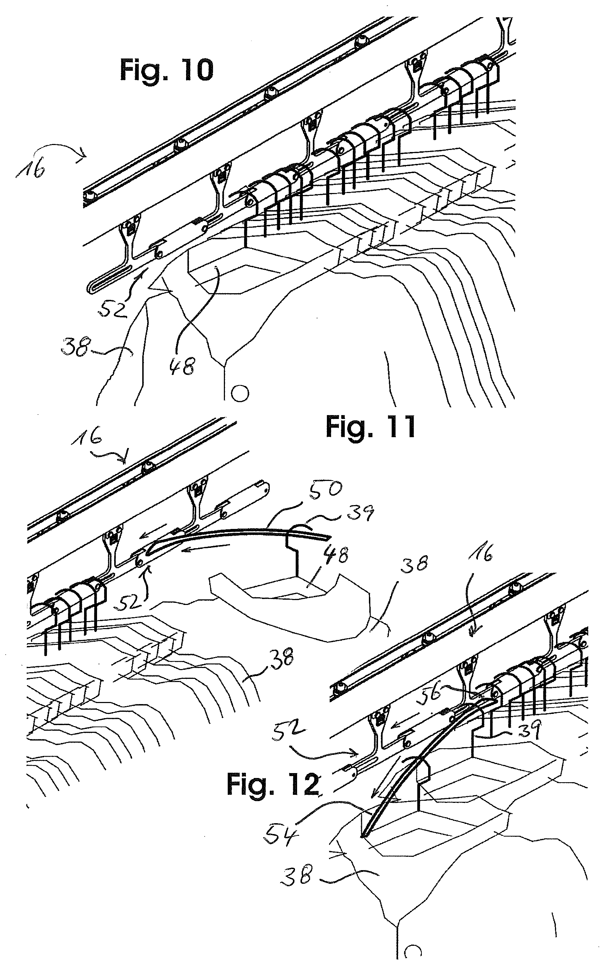

Fig. 10 zeigt in einer perspektivischen Teildarstellung einen Abschnitt eines Endlos-Stetigförderers 16 nach der Erfindung mit daran vermittels Kleiderbügeln 48 angehängten Kleidungsstücken 38. Fig. 11 zeigt symbolisch eine Rutschstange 50 einer Einschleus-Warentransfereinrichtung an einem Endlos-Stetigförderer gemäß Fig. 10. Eine solche Rutschstange 50 kann z. B. Teil einer Warentransferschnittstelle 34 in Fig. 1 sein, an welcher Waren 38 vom Lagerbereich 1 an den Endlos-Stetigförderer 20 übergeben werden. Die Rutschstange 50 ist zu dem Förderer 16 hin geneigt, so dass die mit ihren Kleiderbügelhaken 39 an der Rutschstange 50 gleitenden Waren 38 dem Endlos-Stetigförderer 16 zugeführt werden, wobei die Kleiderbügelhaken 39 automatisch auf ein Halterungsgestänge 52 des Förderers 16 aufrutschen, so dass die Kleiderbügel 48 in die in Fig. 10 gezeigte Ausrichtung an dem Förderer 16 positioniert und von diesem längs der Förderstrecke mitgenommen werden.

Fig. 12 zeigt symbolisch eine Rutschstange 54 einer Ausschleus-Warentransfereinrichtung an einem Endlos-Stetigförderer 16 gemäß Fig. 10. Die Rutschstange 54 kann z. B. Teil einer Warentransferschnittstelle 22 in Fig. 1 sein, an welcher Waren 38 von dem Endlos-Stetigförderer 16 in den Lagerbereich 1 übergeben werden. Die Rutschstange 54 ist zwischen einer Passivposition (nicht gezeigt) und der in Fig. 12 gezeigten Aktivposition bewegbar, wobei sie in der Aktivposition so an das Halterungsgestänge 52 des Förderers 16 angenähert ist, das Kleiderbügelhaken 39 von dem Ende 56 der Rutschstange 54 her auf die Rutschstange 54 aufgeschoben werden und schließlich von letzterer seitlich vom Halterungsgestänge 52 des Förderers 16 weggeführt werden, wie dies in Fig. 12 illustriert ist. In der Passivstellung ist die Rutschstange 54 so weit vom Halterungsgestänge 52 des Förderers 16 entfernt, dass sie die daran mitgeführten Waren 38 bzw. deren Kleiderbügel 48 nicht aufgreifen kann.

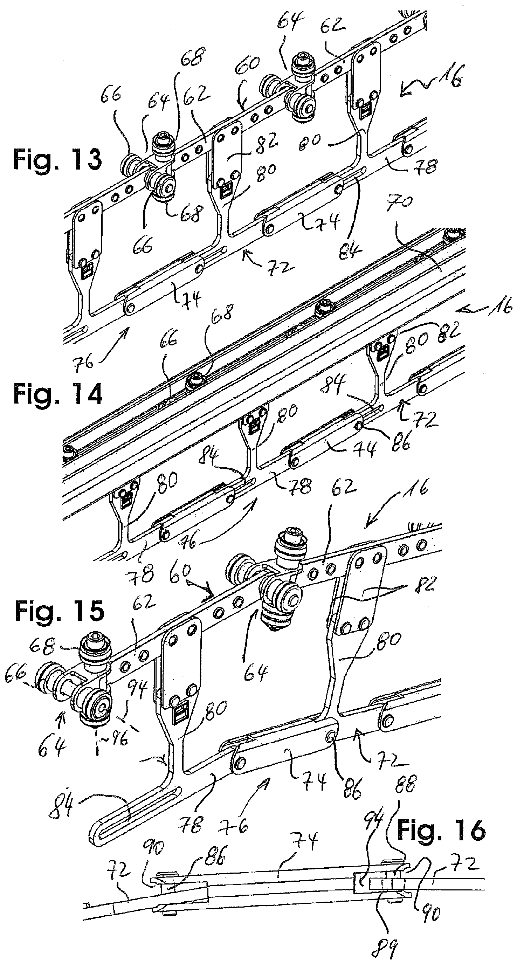

Der Aufbau des in den Fig. 10 - 12 in Teildarstellung gezeigten Endlos-Stetigförderers 16 wird nachstehend unter Bezugnahme auf die Fig. 13 - 16 näher erläutert. Der Endlos-Stetigförderer 16 ist ein raumgängiger Kettenförderer mit einer längs einer geschlossenen Förderstrecke angetriebenen Endlos-Förderkette 60, welche stangenartige Kettenglieder 62 und Kreuzgelenkelemente 64 aufweist, die aufeinander folgende Kettengliederstangen 62 gelenkig miteinander verbinden und Stützrollen 66, 68 zur Abstützung der Endlos-Förderkette 60 an einer Kettenführungsschiene 70 aufweisen. Die Kettenführungsschiene 70 ist in den Fig. 13 und 15 zeichnerisch weggelassen worden, damit der Aufbau der Endlos-Förderkette 60 besser erkennbar ist. An der Kette 60 sind Warenhalterungsmittel in Gestalt von Gestängeelementen 72 und Brückengliedern 74 vorgesehen, die die Gestängeelemente 72 zu einem zusammenhängenden und entlang der Förderkette 60 verlaufenden Halterungsgestänge 76 für daran anzuhängende Warenträgerhaken 39 (vgl. Fig. 10 - 12) gelenkig miteinander verbinden. Jedes Gestängeelement 72 hat einen im Wesentlichen parallel zu der es tragenden Kettengliederstange 62 ausgerichteten unteren Stangenabschnitt 78 und einen davon quer zur betreffenden Kettengliederstange 62 abstehenden Verbindungssteg 80. Der Verbindungssteg 80 ist vermittels Adapterplatten 82 mittig zwischen zwei aufeinander folgenden Kreuzgelenkelementen 64 an der ihm zugeordneten Kettengliederstange 62 im Beispielsfall starr befestigt.

In Fig. 15 ist der Förderer 16 an dem in der Zeichnung linken Kettenglied unterbrochen, d. h. ohne links weiterführendes Kettenglied, dargestellt, um die Bauform der Gestängeelemente 72 anhand des in Fig. 15 einseitig freien Gestängeelementes deutlicher zu zeigen. In der Praxis ist der Förderer 16 selbstverständlich nicht an einem Kettenglied offen, sondern ringartig zu einer Schleife geschlossen.

In dem Stangenabschnitt 78 weist jedes Gestängeelement 72 ein Langloch 84 auf, das von einem Gelenkstift 86 eines benachbarten Brückengliedes 74 durchsetzt ist. Jedes Brückenglied 74 hat einen nach unten hin durchgängig offenen Hohlbereich 94, der an beiden Längsenden 90 nach vorn und nach hinten sowie in Ausschnitten 92 auch nach oben hin offen ist. In diesen Hohlbereich reichen die aufeinander zu weisenden Enden der vorn und hinten benachbarten Gestängeelemente 72 hinein. Wie insbesondere in Fig. 16 erkennbar, hat jedes Brückenglied 74 an beiden Längsenden 90 einen jeweiligen Gelenkstift 86 bzw. 88, wobei der Gelenkstift 86 in der oben bereits erwähnten Weise das Langloch 84 eines benachbarten Gestängeelementes 72 durchsetzt, wohingegen der Gelenkstift 88 Teil eines einfachen Achsdrehgelenkes ist, bei dem der Gelenkstift 88 ein kreisrundes Loch 89 eines benachbarten Gestängeelementes 72 mit Spiel durchsetzt. Wie Fig. 16 weiter zeigt, ist das Gelenkspiel zwischen den Gestängeelementen 72 und den Gelenkstiften 86, 88 so groß, dass sich einander benachbarte Gestängeelemente 72 relativ zu dem sie verbindenden Brückenglied 74 in eine abgewinkelte Stellung bei Kurvenfahrten einstellen können.

Damit auch bei Übergängen von horizontalen Streckenabschnitten zu Steigungsabschnitten oder zu Neigungsabschnitten der Förderstrecke erforderliche Ausgleichsbewegungen der Glieder des Förderers 16 stattfinden können, sind einerseits die Kreuzgelenkelemente 64 zwischen den Kettengliederstangen 62 und andererseits die Gelenkverbindungen 84, 86 und 88, 89 zwischen den Gestängeelementen 72 und den Brückengliedern 74 vorgesehen. Die Kreuzgelenkelemente 64 erlauben ein Verschwenken aufeinander folgender Kettengliederstangen 62 um die Drehachse 94 der Rollen 66 und auch um die Drehachse 96 der Rollen 68. Aufgrund der vorstehend genannten Ausgleichsbewegungsmöglichkeiten kann der Förderer 16 somit Förderstrecken aufweisen, welche nahezu beliebig Steigungsabschnitte, Horizontalabschnitte, Geradeausabschnitte und Kurvenabschnitte haben. Er ist somit flexibel raumgängig einsetzbar.

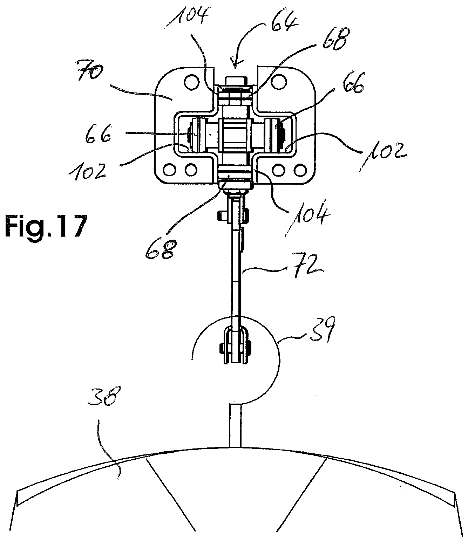

Die Kettenführungsschienen 70 haben ein inneres Profil mit einem im Schnitt kreuzförmigen Hohlraum, wie dies in der Querschnittsdarstellung gemäß Fig. 17 angedeutet ist. Die Rollen 66 der Kreuzgelenkelemente 64 sind auf den inneren Laufflächen 102 des Kettenführungsschienenprofils abgestützt und rollen darauf ab während der Förderbewegung. Die Rollen 68 dienen der Seitenführung des betreffenden Kreuzgelenkelementes 64 insbesondere bei Kurvenfahrten und können sich an inneren Seitenstützflächen 104 des Kettenführungsschienenprofils abstützen.

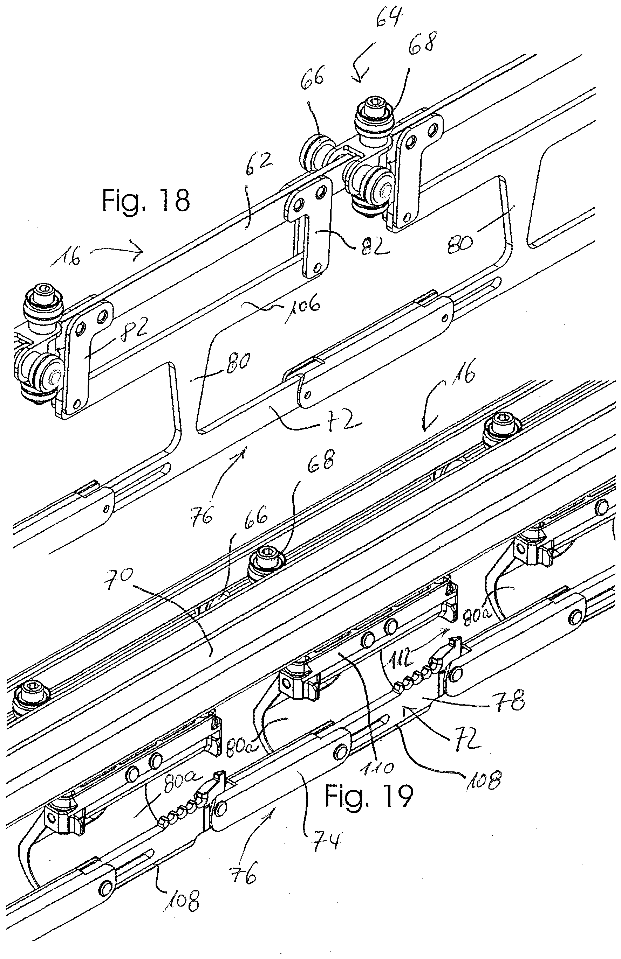

Fig. 18 und Fig. 19 zeigen in einer perspektivischen Teildarstellung Varianten des erfindungsgemäßen Kettenförderers. Die Ausführungsform gemäß Fig. 19 unterscheidet sich von der Ausführungsform gemäß Fig. 10 - 15 durch die Art der Aufhängung des Halterungsgestänges 76 an der Förderkette 60. In Fig. 18 ist der jeweilige Verbindungssteg 80 an seinem oberen Ende mit einer Längsstange 106 integral verbunden, welche an ihren beiden Längsenden mittels Adapterplatten 82 an einer zugeordneten Kettengliederstange 62 so befestigt ist, dass der Verbindungssteg 80 mittig zwischen zwei aufeinander folgenden Kreuzgelenkelementen 64 liegt.

Bei dem Förderer gemäß Fig. 19 sind die Verbindungsstege nicht einfach von der Oberseite der Stangenabschnitte 78 nach oben hin abstehende Elemente, sondern komplexer geformte Halterungsteile 80a, welche die Gestängeelemente 72 nicht an deren oberen Seiten tragen, sondern vorzugsweise an deren Unterseiten 108 abstützen. Die Verbindungsstege 80a haben im Querschnitt einen bogenartigen Verlauf, so dass sie sich von der Unterseite 108 eines betreffenden Gestängeelementes 72 ausgehend einseitig um das Gestängeelement 72 herum und mit seitlichem und oberem Abstand dazu nach oben hin zur Förderkette bzw. zu einem an der Förderkette befestigten Adapter 110 erstrecken.

Die Förderkette der Ausführungsform gemäß Fig. 19 entspricht im Übrigen der in den Fig. 13 und 15 gezeigten Förderkette. Der Vorteil des Förderers 16 in Fig. 19 besteht insbesondere darin, dass die Verbindungsstege 80a im Bereich der Oberseiten der Stangenabschnitte 78 und der Brückenglieder 74 keinerlei Störkontur bilden, so dass das Halterungsgestänge 76 dort einen in Längsrichtung des Förderers 16 durchgehenden Freiraum 112 hat, der die Beschickung des Förderers 16 mit Ware bzw. das Entladen des Förderers 16 von einer Seite her erleichtert.

Die Förderkette 60 wird bei den gezeigten Förderern 16 von (nicht gezeigten) Antriebsmitteln kontinuierlich vorgeschoben, so dass sie non-stop im störungsfreien Betrieb, also im Normalbetrieb, läuft.

Endlos-Steigförderer nach der Erfindung können für einen großen Bereich unterschiedlicher Belastungsanforderungen und für den Transport unterschiedlichster Waren konzipiert sein.

Bezüglich der Gestaltung der Lagerbereiche des Warenlagersystems nach der Erfindung und sonstiger ggf. an dem betreffenden Endlos-Stetigförderer angeschlossener Funktionalbereiche eines Warenlagers besteht große Flexibilität. Dies gilt sowohl für das Layout dieser Bereiche als auch für die betreffenden Warentransferschnittstellen, deren Automatisierungsgrad in einem weiten Bereich variieren kann.

## Patentansprüche

1. Endlosförderer für ein Warenlagersystem, wobei er als raumgängiger Kettenförderer (16) mit einem Kettenantriebsmittel,
einer von dem Kettenantriebsmittel zum kontinuierlichen Umlauf längs einer geschlossenen Förderstrecke angetriebenen Endlosförderkette (60),
einer die Endlosförderkette (60) längs der Förderstrecke zumindest abschnittsweise führenden Kettenführungsanordnung (70) und
von der Endlosförderkette (60) mitgeführten
Warenhalterungsmitteln (72, 74) zur Aufnahme von zu fördernden Waren (38) ausgebildet ist,
wobei die Endlosförderkette (60) Kettengliederstangen (62) und Kreuzgelenkelemente (64), die Abstützelemente, insbesondere drehbare Stützrollen (66, 68), zur Abstützung an der Kettenführungsanordnung (70) haben, aufweist; und wobei
die Warenhalterungsmittel (72, 74) Gestängeelemente (72) und Brückenglieder (74), die die Gestängeelemente (72) zu einem zusammenhängenden und entlang der Endlosförderkette verlaufenden Halterungsgestänge (76) für daran anzuhängende Warenträgerhaken (39) gelenkig miteinander verbinden, umfasst, wobei die Gestängeelemente (72) an den Kettengliederstangen (62) der Endlosförderkette (60) angehängt sind,
**dadurch gekennzeichnet, dass**
die Kreuzgelenkelemente (64) aufeinanderfolgende Kettengliederstangen (62) gelenkig miteinander verbinden und dass die Brückenglieder (74) zumindest einseitig mit dazu benachbarten Gestängeelementen (72) mittels einer jeweiligen Langloch-Gelenkverbindung, bei der ein Gelenkstift (86) in einem Langloch (84) verschiebbar geführt ist, verbunden sind.

2. Endlosförderer nach Anspruch 1, **dadurch gekennzeichnet, dass** jedes Gestängeelement (72) des Halterungsgestänges einen im Wesentlichen parallel zu der es tragenden Kettengliederstange (62) ausgerichteten unteren Stangenabschnitt (78) und wenigstens einen davon quer zur betreffenden Kettengliederstange (62) abstehenden Verbindungssteg (80, 80a) aufweist, der durch Befestigungsmittel (82) mit der Kettengliederstange (62) verbunden ist, wobei in dem Stangenabschnitt (78) ein Langloch (84) vorgesehen ist, welches von einem Gelenkstift (86) eines benachbarten Brückengliedes (74) durchsetzt ist, so dass bei einer Änderung der Steigung der Förderrichtung ausgleichsweise eine relative Verschiebung und Drehbewegung zwischen dem Brückenglied (74) und dem Stangenabschnitt (78) stattfinden kann.

3. Endlosförderer nach Anspruch 1 oder 2, **dadurch gekennzeichnet, dass** jedes Brückenglied (74) nur an einem seiner entgegengesetzten Enden vermittels einer Langloch-Gelenkverbindung (84, 86) mit dem an diesem Ende benachbarten Gestängeelement (72) verbunden ist, während es an dem anderen Ende durch ein einfaches Achsdrehgelenk (88, 69) mit dem an diesem anderen Ende benachbarten Gestängeelement (72) verbunden ist.

4. Endlosförderer nach Anspruch 2 oder nach Anspruch 3 im Rahmen seiner Rückbeziehung auf Anspruch 2, **dadurch gekennzeichnet, dass** die Gestängeelemente (72) und die Brückenelemente (74) einander abwechselnd so relativ zu der Endloskette (60) angeordnet sind, dass die Verbindungsstege (80) der Gestängeabschnitte (72) bei Projektion auf die Endloskette (60) mittensymmetrisch zwischen zwei aufeinander folgenden Kreuzgelenkelementen (34) liegen und dass die Brückenglieder (74) bei Projektion auf die Endloskette (60) in Flucht mit den Kreuzgelenken (64) liegen.

5. Warenlagersystem mit einer Gruppe räumlich separierter Lagerbereiche (1), einer Förderanlage (16, 20) für den Warentransport zu und von einem jeweiligen Lagerbereich (1) der Gruppe und Warentransferschnittstellen (22, 34) zwischen der Förderanlage (16, 20) und den Lagerbereichen (1), wobei wenigstens ein Endlosförderer (16) nach einem der Ansprüche 1 bis 5 als Endlos-Stetigförderer vorgesehen ist,
**dadurch gekennzeichnet, dass** die Förderanlage (16, 20) einen im Normalbetrieb kontinuierlich durchlaufenden ersten Endlos-Stetigförderer (16) umfasst, der Warentransferschnittstellen (22) aller Lagerbereiche (1) miteinander verbindet.

6. Warenlagersystem nach Anspruch 5, **dadurch gekennzeichnet, dass** der Gruppe von Lagerbereichen (1) eine Warenzufuhrschnittstelle (24) für die Warenzufuhr zu der Gruppe und eine Warenableitungsschnittstelle für die Warenableitung von der Gruppe zugeordnet ist und dass der erste Endlos-Stetigförderer (16, 20) auch mit der Warenzufuhrschnittstelle (24) oder/und der Warenableitungsschnittstelle verbunden ist.

7. Warenlagersystem nach einem der vorhergehenden auf ein Warenlagersystem gerichteten Ansprüche, **dadurch gekennzeichnet, dass** die Förderanlage (16, 20) einen alle Lagerbereiche (1) an Warentransferschnittstellen (34) miteinander verbindenden, im Normalbetrieb kontinuierlich durchlaufenden zweiten Endlos-Stetigförderer (20) umfasst.

8. Warenlagersystem nach einem der vorhergehenden auf ein Warenlagersystem gerichteten Ansprüche, **dadurch gekennzeichnet, dass** der erste Endlos-Stetigförderer (16) raumgängig ist und die Lagerbereiche (1) mit ihren Warentransferschnittstellen (22) über unterschiedliche Höhenebenen, insbesondere über unterschiedliche Lagergebäudestockwerke verteilt angeordnet sind.

9. Warenlagersystem nach Anspruch 6 und 7, **dadurch gekennzeichnet, dass** der zweite Endlos-Stetigförderer (20) auch mit der Warenzufuhrschnittstelle (24) oder/und der Warenableitungsschnittstelle verbunden ist und dass der zweite Endlos-Stetigförderer (20) raumgängig ist und die Lagerbereiche (1) mit ihren Warentransferschnittstellen (34) über unterschiedliche Höhenebenen, insbesondere über unterschiedliche Lagergebäudestockwerke verteilt angeordnet sind.

10. Warenlagersystem nach einem der vorhergehenden auf ein Warenlagersystem gerichteten Ansprüche, **dadurch gekennzeichnet, dass** in wenigstens einem Lagerbereich (1) wenigstens eine mittels einer Steuereinrichtung steuerbare Warentransfereinrichtung (54) vorgesehen ist, die zum gesteuerten automatischen Transferieren von Waren (38) zwischen dem ersten Endlos-Stetigförderer (16) und dem betreffenden Lagerbereich (1) an einer Warentransferschnittstelle (22) eingerichtet ist.

11. Warenlagersystem nach Anspruch 7 oder wenigstens einem der Ansprüche 8 bis 10 im Umfang ihrer Rückbeziehung auf Anspruch 7, **dadurch gekennzeichnet, dass** in wenigstens einem Lagerbereich (1) wenigstens eine mittels einer Steuereinrichtung steuerbare Warentransfereinrichtung (50) vorgesehen ist, die zum gesteuerten automatischen Transferieren von Waren (38) zwischen dem zweiten Endlos-Stetigförderer (20) und dem betreffenden Lagerbereich (1) an einer Warentransferschnittstelle (34) eingerichtet ist.

12. Warenlagersystem nach den Ansprüchen 5, 6 und 7 oder einem der Ansprüche 8 bis 11 im Rahmen ihrer Rückbeziehung auf die Ansprüche 5, 6 und 7, **dadurch gekennzeichnet, dass** die durch den ersten Stetigförderer (16) miteinander verbundenen Warentransferschnittstellen (22) für den selektiven Warentransfer von dem ersten Stetigförderer (16) zu den Lagerbereichen (1) eingerichtet sind und dass die durch den zweiten Stetigförderer (20) miteinander verbundenen Warentransferschnittstellen (34) für den selektiven Warentransfer von den Lagerbereichen (1) zu dem zweiten Stetigförderer (20) zu eingerichtet sind.

13. Warenlagersystem nach einem der vorhergehenden auf ein Warenlagersystem gerichteten Ansprüche, **dadurch gekennzeichnet, dass** zumindest ein Lagerbereich (1) eine Vielzahl nebeneinander liegender Reihen (2) von Lagerplätzen umfasst, wobei die Warentransferschnittstellen (22, 34) nahe den Reihenenden der Lagerplatzreihen vorgesehen sind.

## Claims

1. Endless conveyor for a goods storage system, it being designed as a spatially mobile chain conveyor (16), comprising a chain drive means,
an endless conveyor chain (60) driven by the chain drive means for continuous circulation along a closed conveyor track,
a chain guide arrangement (70) which guides the endless conveyor chain (60) along the conveyor track at least in portions, and goods retaining means (72, 74), which are guided with the endless conveyor chain (60), for receiving goods (38) to be conveyed,
the endless conveyor chain (60) comprising chain-link bars (62) and universal joint elements (64) which have support elements, in particular rotatable support rolls (66, 68), for providing support on the chain guide arrangement (70); and the goods retaining means (72, 74) comprising rod elements (72) and bridge members (74) which hingedly interconnect the rod elements (72) to form a continuous retaining rod (76) for goods-carrying hooks (39) to be hung thereon which extends along the endless conveyor chain, the rod elements (72) being hung on the chain-link bars (62) of the endless conveyor chain (60),
**characterised in that**
the universal joint elements (64) hingedly interconnect successive chain-link bars (62), and **in that** the bridge members (74) are connected on at least one side to rod elements (72) adjacent thereto by means of a slot-hinge connection in each case, in which a hinge pin (86) is movably guided in a slot (84).

2. Endless conveyor according to claim 1, **characterised in that** each rod element (72) of the retaining rod comprises a lower bar portion (78) which is oriented substantially in parallel with the chain-link bar (62) which carries the corresponding rod element, and at least one connecting strip (80, 80a) which protrudes therefrom transversely to the corresponding chain-link bar (62) and which is connected to the chain-link bar (62) by a fastening means (82), a slot (84) being provided in the bar portion (78) and being penetrated by a hinge pin (86) of an adjacent bridge member (74), such that a compensating relative movement and rotational movement can take place between the bridge member (74) and the bar portion (78) when the incline of the conveying direction is changed.

3. Endless conveyor according to either claim 1 or claim 2, **characterised in that** each bridge member (74) is connected, at only one of its opposed ends, to the rod element (72) adjacent to this end by means of an slot-hinge connection (84, 86), whereas said member is connected, at the other end, to the rod element (72) adjacent to this other end by means of a single-axis hinge joint (88, 69).

4. Endless conveyor according to claim 2 or according to claim 3 with respect to its back-reference to claim 2, **characterised in that** the rod elements (72) and the bridge elements (74) are alternately arranged relative to the endless chain (60) such that the connection strips (80) of the rod portions (72), when projected onto the endless chain (60), lie between two successive universal joint elements (34) in a centrally symmetrical manner, and **in that** the bridge members (74), when projected onto the endless chain (60), are aligned with the universal joints (64).

5. Goods storage system comprising a group of spatially separate storage regions (1), a conveying apparatus (16, 20) for transporting goods to and from a corresponding storage region (1) of the group and goods transfer interfaces (22, 34) between the conveying apparatus (16, 20) and the storage regions (1), at least one endless conveyor (16) according to any of claims 1 to 5 being provided as an endless steady-flow conveyor,
**characterised in that** the conveying apparatus (16, 20) comprises a first endless steady-flow conveyor (16) which moves continually during normal operation and interconnects goods transfer interfaces (22) of all the storage regions (1).

6. Goods storage system according to claim 5, **characterised in that** the group of storage regions (1) is associated with a goods supply interface (24) for supplying goods to the group and with a goods removal interface for removing goods from the group, and **in that** the first endless steady-flow conveyor (16, 20) is also connected to the goods supply interface (24) and/or the goods removal interface.

7. Goods storage system according to any of the preceding claims directed to a goods storage system, **characterised in that** the conveying apparatus (16, 20) comprises a second endless steady-flow conveyor (20) which interconnects all the storage regions (1) at goods transfer interfaces (34) and moves continually during normal operation.

8. Goods storage system according to any of the preceding claims directed to a goods storage system, **characterised in that** the first endless steady-flow conveyor (16) is spatially mobile and the storage regions (1), together with the goods transfer interfaces (22) thereof, are distributed over different horizontal planes, in particular over different storeys of a warehouse.

9. Goods storage system according to either claim 6 or claim 7, **characterised in that** the second endless steady-flow conveyor (20) is also connected to the goods supply interface (24) and/or the goods removal interface, and **in that** the second endless steady-flow conveyor (20) is spatially mobile and the storage regions (1), together with the goods transfer interfaces (34) thereof, are distributed over different horizontal planes, in particular over different storeys of a warehouse.

10. Goods storage system according to any of the preceding claims directed to a goods storage system, **characterised in that** at least one goods transfer means (54) which can be controlled by a controller is provided in at least one storage region (1) and is designed to automatically transfer goods (38) in a controlled manner between the first endless steady-flow conveyor (16) and the relevant storage region (1) at a goods transfer interface (22).

11. Goods storage system according to claim 7 or at least one of claims 8 to 10 in the scope of their back-reference to claim 7, **characterised in that** at least one goods transfer means (50) which can be controlled by a controller is provided in at least one storage region (1) and is designed to automatically transfer goods (38) in a controlled manner between the second endless steady-flow conveyor (20) and the relevant storage region (1) at a goods transfer interface (34).

12. Goods storage system according to claims 5, 6 and 7 or any of claims 8 to 11 with respect to their back-reference to claims 5, 6 and 7, **characterised in that** the goods transfer interfaces (22) which are interconnected by means of the first steady-flow conveyor (16) are designed to selectively transfer goods from the first steady-flow conveyor (16) to the storage regions (1), and **in that** the goods transfer interfaces (34) which are interconnected by means of the second steady-flow conveyor (20) are designed to selectively transfer goods from the storage regions (1) to the second steady-flow conveyor (20).

13. Goods storage system according to any of the preceding claims directed to a goods storage system, **characterised in that** at least one storage region (1) comprises a plurality of adjacent rows (2) of storage spaces, the goods transfer interfaces (22, 34) being provided next to the row ends of the storage space rows.

## Revendications

1. Convoyeur sans fin pour un système de stockage de marchandises, dans lequel il est réalisé en tant que convoyeur à chaîne adaptable à l'espace (16) avec un moyen d'entraînement de chaîne,
une chaîne de transport sans fin (60) entraînée par le moyen d'entraînement de chaîne pour la circulation continue le long d'un parcours de transport fermé,
un ensemble de guidage de chaîne (70) guidant la chaîne de transport sans fin (60) au moins par tronçons le long du parcours de transport et des moyens de retenue de marchandises (72, 74) entraînés par la chaîne de transport sans fin (60) pour accueillir des marchandises à transporter (38) ;
dans lequel la chaîne de transport sans fin (60) présente des tiges formant maillon de chaîne (62) et des éléments d'articulation en croix (64), qui ont des éléments d'appui, en particulier des rouleaux support rotatifs (66, 68), pour l'appui sur l'ensemble de guidage de chaîne (70) ; et dans lequel les moyens de retenue de marchandises (72, 74) comprennent des éléments de tringlerie (72) et des organes de pontage (74), qui relient l'un à l'autre de manière articulée les éléments de tringlerie (72) en une tringlerie de retenue (76) solidarisée et s'étendant le long de la chaîne de transport sans fin pour des crochets porte-marchandises (39) à accrocher à ceux-ci, dans lequel les éléments de tringlerie (72) sont accrochés aux tiges formant maillon de chaîne (62) de la chaîne de transport sans fin (60),
**caractérisé en ce que**
les éléments d'articulation en croix (64) relient l'une à l'autre de manière articulée des tiges formant maillon de chaîne (62) successives et que les organes de pontage (74) sont reliés au moins d'un côté à des éléments de tringlerie (72) adjacents à ceux-ci au moyen d'une liaison articulée à trou oblong respective, dans laquelle une tige d'articulation (86) est guidée de manière coulissante dans un trou oblong (84).

2. Convoyeur sans fin selon la revendication 1, **caractérisé en ce que** chaque élément de tringlerie (72) de la tringlerie de retenue présente une section de tige (78) inférieure orientée sensiblement parallèlement à la tige formant maillon de chaîne (62) le portant et au moins une barrette de liaison (80, 80a) s'en éloignant transversalement vers la tige formant maillon de chaîne (62) concernée, qui est reliée à la tige formant maillon de chaîne (62) par des moyens de fixation (82), dans lequel un trou oblong (84) est prévu dans la section de tige (78), lequel est traversé par une tige d'articulation (86) d'un organe de pontage (74) adjacent de sorte que lors d'une modification de l'inclinaison de la direction de transport un décalage et mouvement de rotation relatifs entre l'organe de pontage (74) et la section de tige (78) peut avoir lieu en compensation.

3. Convoyeur sans fin selon la revendication 1 ou 2, **caractérisé en ce que** chaque organe de pontage (74) est relié uniquement au niveau d'une de ses extrémités opposées au moyen d'une liaison articulée à trou oblong (84, 86) à l'élément de tringlerie (72) adjacent à cette extrémité, pendant qu'il est relié au niveau de l'autre extrémité par une articulation à rotation axiale simple (88, 69) à l'élément de tringlerie (72) adjacent à cette autre extrémité.

4. Convoyeur sans fin selon la revendication 2 ou selon la revendication 3 dans le cadre de son rattachement à la revendication 2, **caractérisé en ce que** les éléments de tringlerie (72) et les éléments pont (74) sont agencés en s'alternant l'un l'autre par rapport à la chaîne sans fin (60) de sorte que les barrettes de liaison (80) des sections de tringlerie (72) se trouvent lors de la projection sur la chaîne sans fin (60) par symétrie centrale entre deux éléments d'articulation en croix (34) successifs et que les organes de pontage (74) se trouvent par projection sur la chaîne sans fin (60) en alignement avec les articulations en croix (64).

5. Système de stockage de marchandises avec un groupe de zones de stockage (1) spatialement séparées, une installation de transport (16, 20) pour le transport de marchandises vers et depuis une zone de stockage (1) respective du groupe et des interfaces de transfert de marchandises (22, 34) entre l'installation de transport (16, 20) et les zones de stockage (1), dans lequel au moins un convoyeur sans fin (16) selon l'une quelconque des revendications 1 à 5 est prévu en tant que convoyeur continu sans fin,
**caractérisé en ce que** l'installation de transport (16, 20) comprend un premier convoyeur continu sans fin (16) fonctionnant en continu dans un mode de fonctionnement normal, qui relie l'une à l'autre les interfaces de transfert de marchandises (22) de toutes les zones de stockage (1).

6. Système de stockage de marchandises selon la revendication 5, **caractérisé en ce qu'**une interface d'amenée de marchandises (24) pour l'amenée de marchandises au groupe et une interface d'évacuation de marchandises pour l'évacuation de marchandises du groupe sont associées au groupe de zones de stockage (1) et que le premier convoyeur continu sans fin (16, 20) est relié également à l'interface d'amenée de marchandises (24) et/ou à l'interface d'évacuation de marchandises.

7. Système de stockage de marchandises selon l'une quelconque des revendications précédentes renvoyant à un système de stockage de marchandises, **caractérisé en ce que** l'installation de transport (16, 20) comprend un deuxième convoyeur continu sans fin (20) fonctionnant en continu dans le mode de fonctionnement normal, reliant l'une à l'autre toutes les zones de stockage (1) au niveau d'interfaces de transfert de marchandises (34).

8. Système de stockage de marchandises selon l'une quelconque des revendications précédentes renvoyant à un système de stockage de marchandises, **caractérisé en ce que** le premier convoyeur continu sans fin (16) est adaptable à l'espace et les zones de stockage (1) avec leurs interfaces de transfert de marchandises (22) sont distribuées à différentes hauteurs, en particulier sur différents étages de bâtiment de stockage.

9. Système de stockage de marchandises selon la revendication 6 et 7, **caractérisé en ce que** le deuxième convoyeur continu sans fin (20) est également relié à l'interface d'amenée de marchandises (24) et/ou à l'interface d'évacuation de marchandises et que le deuxième convoyeur continu sans fin (20) est adaptable à l'espace et les zones de stockage (1) avec leurs interfaces de transfert de marchandises (34) sont distribuées à différentes hauteurs, en particulier sur différents étages de bâtiment de stockage.

10. Système de stockage de marchandises selon l'une quelconque des revendications précédentes renvoyant à un système de stockage de marchandises, **caractérisé en ce qu'**au moins un dispositif de transfert de marchandises (54) pouvant être commandé au moyen d'un dispositif de commande est prévu dans au moins une zone de stockage (1), qui est aménagé pour le transfert automatique commandé de marchandises (38) entre le premier convoyeur continu sans fin (16) et la zone de stockage (1) concernée au niveau d'une interface de transfert de marchandises (22).

11. Système de stockage de marchandises selon la revendication 7 ou au moins l'une quelconque des revendications 8 à 10 dans le cadre de leur rattachement à la revendication 7, **caractérisé en ce qu'**au moins un dispositif de transfert de marchandises (50) pouvant être commandé au moyen d'un dispositif de commande est prévu dans au moins une zone de stockage (1), qui est aménagé pour le transfert automatique commandé de marchandises (38) entre le deuxième convoyeur continu sans fin (20) et la zone de stockage (1) concernée au niveau d'une interface de transfert de marchandises (34).

12. Système de stockage de marchandises selon les revendications 5, 6 et 7 ou selon l'une quelconque des revendications 8 à 11 dans le cadre de leur rattachement aux revendications 5, 6 et 7, **caractérisé en ce que** les interfaces de transfert de marchandises (22) reliées l'une à l'autre par le premier convoyeur continu (16) sont aménagées pour le transfert de marchandises sélectif du premier convoyeur continu (16) aux zones de stockage (1) et que les interfaces de transfert de marchandises (34) reliées l'une à l'autre par le deuxième convoyeur continu (20) sont aménagées pour le transfert de marchandises sélectif des zones de stockage (1) au deuxième convoyeur continu (20).

13. Système de stockage de marchandises selon l'une quelconque des revendications précédentes renvoyant à un système de stockage de marchandises, **caractérisé en ce qu'**au moins une zone de stockage (1) comprend une pluralité de rangées (2) disposées côte à côte d'emplacements de stockage, dans lequel les interfaces de transfert de marchandises (22, 34) sont prévues près des extrémités de rangées des rangées d'emplacements de stockage.
